# EUROPEAN PATENT SPECIFICATION

(11) **EP 3 037 135 B1**
(45) Date of publication and mention of the grant of the patent: **19.05.2021**
(21) Application number: 14200260.9
(22) Date of filing: 23.12.2014
(51) Int. Cl.: A62C 27/00, B60R 1/00, B66C 23/78, B66F 17/00

(54) **A firefighting vehicle comprising an extractable and turntable ladder and extendable lateral supports, and a visual assistance system for positioning said vehicle, and method for positioning such a firefighting vehicle**
Feuerwehrfahrzeug mit einer ausziehbaren und drehbaren Leiter und ausfahrbaren seitlichen Stützen und einem visuellen Assistenzsystem zur Positionierung des Fahrzeugs und Verfahren zur Positionierung eines solchen Feuerwehrfahrzeugs
Véhicule de lutte contre l'incendie comprenant une échelle extractible et tournante et des supports latéraux extensibles, ayant un système d'assistance visuelle pour le positionnement dudit véhicule, et procédé pour le positionnement d'un tel véhicule de lutte contre l'incendie

(43) Date of publication of application: 29.06.2016
(73) Proprietor: IVECO MAGIRUS AG, D-89079 Ulm (DE)
(72) Inventor: Alexander, Huehn, 89075 Ulm (DE)
(74) Representative: Franzolin, Luigi

(56) References cited:
- EP-A1- 2 722 302
- EP-A2- 0 992 773
- EP-A2- 2 003 018
- AU-A1- 2013 260 793
- JP-A- 2008 074 594

## Description

The present invention relates to a firefighting vehicle comprising an extractable and turntable ladder and extendable lateral supports, having a visual assistance system for positioning said vehicle, and method for positioning such a firefighting vehicle.

For utility vehicles of different kinds, visual assistance systems are known that comprise cameras for monitoring the ground area around the vehicle. For example, such camera systems are known for trucks to facilitate the manoeuvring of the vehicles, in particular in a backward driving situation. The driver can watch the vehicle position on a display during driving operation.

Rescue vehicles, such as fire fighting vehicles, are often be manoeuvred in difficult positions, for example, in narrow alleys between houses, parking cars and other obstacles. Valuable time is often lost in manoeuvring the vehicle properly, in particular to find a position in which all parts of the vehicle can be positioned and operated properly. To this purpose the driver has to estimate future positions of vehicle parts that are extracted or extended from the vehicle after it has stopped in its operating position. For example, vehicles that are provided with turnable and extractable ladders are equipped with lateral ground supports or outriggers that can be extracted in a mainly horizontal direction so that their ends are located in a distance from the vehicle body in the operating position of the ladder. These operating positions of the ground supports have to be estimated by the driver when he brings the vehicle into its final position. Because the operating positions of all ground supports must be estimated at the same time, manoeuvring of the vehicle is difficult and needs high operation skills. These problems are even aggravated by the fact that usually the visibility conditions are very poor, for example, in a dark environment, and usually the driver needs the help of an assisting person who monitors the manoeuvring.

It is noted that the ground supports mentioned above are just one example for any vehicle part that is moved to be extended or moved in relation to the vehicle body in the rescue situation. For example, it is important to estimate the position of the ladder, i. e. its operating radius and its rotary mounting center. On the basis of the visual assistance systems that are known from the state of the art, the positioning of the rotary center of the ladder is still difficult. Moreover, it is often hard to anticipate the operating radius of the rear overhanging part of the ladder including the ladder gear. If this operating radius is not considered in its full extend, the operation space of the ladder is at least limited.

There are other equipment parts stored or retracted within the vehicle body that consume space around the vehicle in the operating situation. Such stored parts are for example stretchers, storage boxes or the like that can be unloaded from the vehicle completely to be used and operated independent from the vehicle. Parts that may be extracted or unloaded from the vehicle body but keep a connection to it may comprise winch ropes, hoses coupled to internal pumps, extendable platforms, or equipment lockers. It is important to anticipate the space needed by such equipment parts and their final position around the vehicle when positioning the vehicle.

EP2722302 A1 discloses a firefighting vehicle comprising an extractable and turnable ladder and extendable ground supports, comprising a plurality of cameras disposed at the vehicle in an elevated position to monitor the ground area around the vehicle and having a system to present the driver with estimated future positions of extendable lateral ground supports.

It is therefore an object of the present invention to provide a firefighting vehicle of the above kind, which makes the positioning of the vehicle easier, even in a narrow space, under poor visual conditions and without the help of an assisting person, to save time for positioning the vehicle.

This object is achieved by a firefighting vehicle comprising the features of claim 1, and by a method for positioning a firefighting vehicle comprising the features of claim 5.

The firefighting vehicle according to the present invention is equipped with a visual assistance system that comprises a plurality of cameras disposed at the vehicle in an elevated position such that the cameras can monitor the ground area around the vehicle. The cameras are positioned such that adjacent visual fields of the cameras overlap or supplement each other.

The visual assistance system further comprises a processing unit that is provided to combine the single images taken by the cameras to one overall image, and to calculate visual markings within the overall image on the basis of vehicle data. These vehicle data can be related to the dimensions of the vehicle, the dimensions of extractable or any other (moveable) vehicle parts, etc. Such visual markings may include geometrical indications like lines or symbols but may also comprise readable text or numbers indicating dimensional values, measured values or the like.

The resulting overall image shows the surrounding of the vehicle together with the calculated visual markings that give the operator an orientation that helps him to position the vehicle. The overall image is displayed on a visual display to be perceived by the operator, which may be the driver at his driving seat within the cabin.

Combining the images gives a more natural and realistic impression of the surrounding of the vehicle, for example as a bird's eye view. With the visual markings being superimposed with the actual image taken by the cameras, the estimation of operating parts of the vehicle is easier. The visual assistance system can also be provided to generate visual or acoustic warnings that can be perceived by the operator if the visual markings indicate, for example, a collision with obstacles in the environment of the vehicle.

According to the present invention, the visual markings represent positions of outer vehicle parts.

According to the invention the positions of outer vehicle parts are actual positions or estimated future positions derived from movements of the vehicle or its parts.

The visual markings represent estimated or calculated extension positions of extendable vehicle parts. Such an extendable vehicle part is, an extractable and turnable ladder. Extendable vehicle parts can also be the outstanding turntable of a ladder, outriggers or lateral ground supports for stabilizing the vehicle on the ground, equipment lockers, stretchers, or any other rescue equipment parts.

The extendable vehicle parts are lateral mount support that are moveable between retracted positions and extracted operating positions in which the ends of the supports rest on the ground. If these final extracted operating positions of the lateral ground supports are represented by the visual markings within the overall image presented to the operator, the manoeuvring of the vehicle in a rescue situation is facilitated.

Preferably, the overall image is a full environmental view covering 360° around the vehicle. In this example, the operator can be given a full bird's eye view of the vehicle that may also include the vehicle body. If the fire fighting vehicle is equipped with an aerial apparatus, like an extendable and turnable ladder, the rotary center of the aerial apparatus can also be marked by a visual marking within the overall image.

More preferably, the cameras are provided to generate thermal images. This may facilitate the positioning and orientation in a dark environment with poor visibility, for example, at night or in bad weather. Moreover, thermal images like infrared images can help to identify hollow spaces in the environment of the vehicle, for example, beneath a manhole cover of the municipal sewage system.

According to the invention the visual assistance system comprises an additional camera disposed under the vehicle to monitor the ground area under the vehicle, and the processing unit is provided to combine the image taken by the additional camera with the images taken by the remaining cameras to get an overall image. By this ground monitoring it is possible to monitor the area beneath the turning axis of a turnable ladder that is disposed on top of the vehicle.

A method for positioning a firefighting vehicle, according to the present invention comprises the following steps:
- monitoring the ground area around the vehicle by means of cameras in elevated camera positions such that adjacent visual fields of the cameras overlap or supplement each other,
- combining the signal images taken by the cameras to one overall image and calculating visual markings within the overall image on the basis of vehicle data,
- and displaying the overall image containing the visual markings.

According to this method, it comprises the steps of determining actual positions of the vehicle or its parts, and calculating visual markings that represent the determined actual positions.

The method according to the present invention comprises the steps of estimating future positions of the vehicle or its parts, and calculating visual markings that represent the estimated future positions.

According to preferred embodiment of this method, it further comprises the step of combining the single images to an overall image that represents a full environmental view covering 360° around the vehicle.

More preferably, the cameras generate thermal images.

The method according to the invention also comprises monitoring the ground area under the vehicle by means of an additional camera disposed under the vehicle, and combining the image taken by the additional camera with the overall image.

These and other aspects of the present invention will be apparent from and elucidated with reference to a preferred embodiment described hereinafter.
- Fig. 1: is a schematic view of a utility vehicle, namely a fire fighting vehicle according to one embodiment of the present invention from above; and
- Fig. 2: is a schematic view of an overall image generated by the processing unit and displayed on a visual display of the utility vehicle shown in Fig. 1.

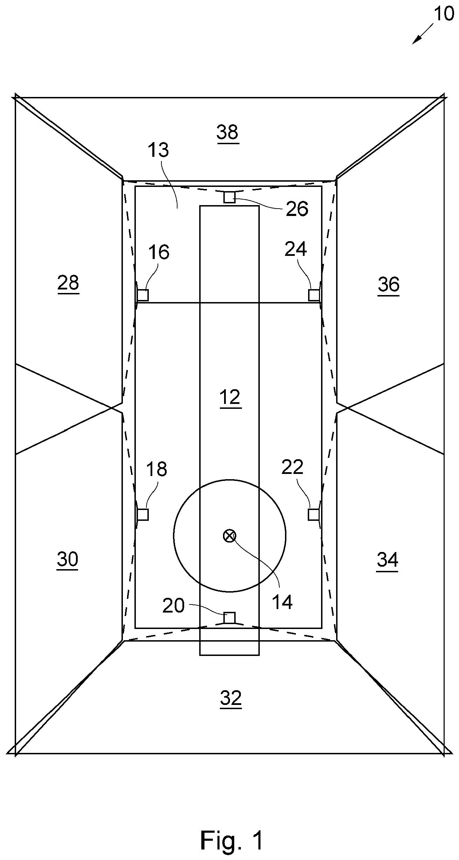

The fire fighting vehicle in Fig. 1 is one example of a utility vehicle 10 representing an embodiment of the present invention. This firefighting vehicle 10 is shown from above, i. e. the visual axis stands perpendicular to a horizontal flat ground plane on which the firefighting vehicle 10 is positioned. It comprises a driver's cab 13 at a front end of the utility vehicle 10, and a turnable ladder 12 on top of a rear portion of the vehicle 10. The turnable ladder 12 can be turned around a vertical turning axis 14. As usual, the turnable ladder 12 is provided as a telescopic ladder that is extractable. To stabilize the utility vehicle 10 in an operating position of the turnable ladder 12, it is further equipped with lateral ground supports that are not shown in Fig. 1 because they are retracted into the vehicle body.

The firefighting vehicle 10 in Fig. 1 is further provided with a visual assistance system that facilitates the positioning of the vehicle. The visual assistance system comprises a plurality of cameras, namely six cameras 16,18,20,22,24,26 located in elevated positions, for example, at top portions of the vehicle 10 to monitor the ground area around the vehicle 10. A first camera 16 is positioned at the left front side of the vehicle 10, a second camera 18 is positioned at the left rear portion of the vehicle 10, a third camera 20 is positioned at the back portion of the vehicle 10, a fourth camera 22 is positioned at the rear right portion of the vehicle 10, a fifth camera 24 is positioned at the left front portion of the vehicle 10, and a sixth camera 26 is positioned at the front of the vehicle 10, for example, at the roof portion of the driver's cab 13. As can be seen in Fig. 1, the visual fields 28,30,32,34,36,38 of the first to sixth cameras 16,18,20,22,24,26 supplement each other in a way that the visual fields of two adjacent cameras overlap each other. For example, the visual field 30 of the second camera 18 overlaps with the visual field 28 of the adjacent first camera 16, and with the visual field 32 of the third camera 20. Considering the next visual fields that follow in the counterclockwise direction, the visual field 32 of the third camera 20 overlaps with the visual field 34 of the fourth camera 22, and so on. In this way, all visual fields 28,30,32,34,36,38 supplement each other to form a frame-like area on the ground surrounding the utility vehicle 10 completely to give a full overview over the environment of the utility vehicle 10.

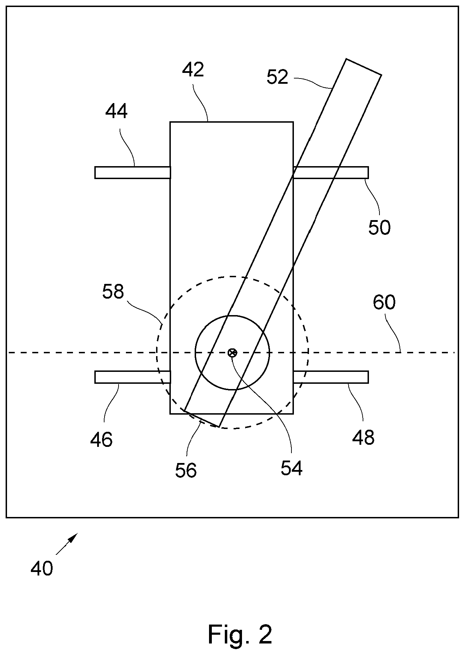

The visual assistance system of the firefighting vehicle 10 according to this embodiment of the present invention further comprises a processing unit (not shown) for combining the single images taken by the cameras 16,18,20,22,24,26 to one overall image 40, as it is shown in Fig. 2. This overall image further comprises visual markings that are calculated by the processing unit on the basis of vehicle data, including, for example, the vehicle dimensions in relation of the camera positions. It is noted that the term "markings" in the sense of the present invention not only denotes graphic markings, like lines, geometrical symbols, etc. indicating dimensions or positions, but also comprises written information or numbers indicating distances, measured values or the like.

The vehicle 10 itself is represented by a central rectangular marking 42 and can be rendered by the processing unit. Like any other portion within the image 40 that is not covered by the visual fields 28,30,32,34,36,38, central portions of the vehicle body lying within the "blind" areas of the cameras 16,18,20,22,24,26 can be extrapolated by the processing unit to supplement the visual information obtained by the cameras 16,18,20,22,24,26 to complete the image 40.

On the left and right sides of the firefighting vehicle 10, four markings 44,46,48,50 represent the fully extracted positions of the lateral ground supports in their operating state. These visual markings 44,46,48,50 are calculated on the basis of the length information concerning the ground supports that are stored within the processing unit and related to the position of the utility vehicle 10 and the camera positions, as said out above. While the marking 42 representing the firefighting vehicle 10 represents the actual position of the firefighting vehicle 10, the markings 44,46,48,50 of the ground supports represent estimated future positions of the extendable ground supports. In this way, other extendable vehicle parts can be marked by representative visual markings within the overall image 40.

As a further extendable vehicle part, a further marking 52 representing the turnable ladder 12 in a partially extracted turning position is marked within the overall image 40. The rotary center 54 of the turnable ladder 12 is also marked within the rectangular marking 42 of the utility vehicle 10. On the basis of this information, the operator of the vehicle, i. e. the driver, can position the firefighting vehicle 10 such that the visual markings 44,46,48,50 marking the future positions of the lateral ground supports do not collide with any obstacles within the environment of the utility vehicle 10. In the same way, a turning position of the turnable ladder 12 can be considered before moving to this position.

An overhanging rear portion 56 of the turnable ladder 12 is also marked within the overall image 40. Its full potential operating radius is marked by a circle 58 around the rotary center 54. The line 60 crossing the rotary center 54 in a traverse direction (perpendicular to the driving direction) marks the position of the rotary center 54 with respect to the length of the vehicle 10. For example, if an assisting person takes a position next to the vehicle 10 to mark a desired longitudinal position (i.e. in the driving direction) on which the rotary center 54 shall be positioned, the operator can drive the vehicle 10 slowly forward until the line 60 crosses the position of the assisting person, indicating that the desired longitudinal position is reached.

In situations of poor visibility, with low light or bad weather conditions, the cameras 16,18,20,22,24,26 can be provided to generate thermal images that allow a consideration of the position of the firefighting vehicle 10 also in such situations. Such thermal images also allow the identification of hollow spaces in the ground, for example, to identify manhole covers that cause temperature differences visible in the thermal image.

Unlike in the present embodiment of the firefighting vehicle 10, the cameras 16,18,20,22,24,26 can also be grouped closer together at the top of a pole looming vertically from the vehicle, or at any other vehicle part that protrudes in a vertical direction. By such a closely grouped arrangement of the cameras 16,18,20,22,24,26, parts of the vehicle body can be recorded better than in the present embodiment, and "blind areas" of the cameras 16,18,20,22,24,26 can be avoided to a larger extend.

According to the invention it is also possible to extend the arrangement of the cameras 16,18,20,22,24,26 by an additional camera (not shown) underneath the vehicle 10 to monitor the ground directly under the vehicle, in particular including the ground beneath the rotary center 54 within its visual field. The image of this additional camera is combined with those of the other cameras 16,18,20,22,24,26 to get an overall image 40 including the image of the additional camera.

A visual display for displaying the overall image 40 shown in Fig. 2 can be installed within the driver's cab 13 to be viewed by the driver when he is positioned on the driver's seat during operation of the utility vehicle 10.

## Claims

1. A firefighting vehicle comprising an extractable and turntable ladder and extendable lateral supports, and a visual assistance system for positioning said vehicle, said visual assistance system comprising a plurality of cameras (16,18,20,22,24,26) disposed at the vehicle (10) in an elevated position to monitor the ground area around the vehicle (10) such that adjacent visual fields (28,30,32,34,36,38) of the cameras (16,18,20,22,24,26) overlap each other, a processing unit provided to combine the single images taken by the cameras (16,18,20,22,24,26) to one overall image and to calculate within the overall image (40), based on vehicle data, visual markings (42,44,46,48,50,52,54) that represent actual or estimated future extension positions of outer extendable vehicle parts derived from movements of the vehicle, and a visual display for displaying the overall image (40) containing said calculated visual markings (42,44,46,48,50,52,54), wherein the visual assistance system comprises an additional camera disposed under the vehicle (10) to monitor the ground area under the vehicle (10), the processing unit being configured to combine the image taken by the additional camera with the images taken by the remaining cameras (16,18,20,22,24,26) to get a further overall image (40) including the image taken by the additional camera, and to display the further overall image with said calculated visual markings (42,44,46,48,50,52,54) on the visual display, wherein the outer extendable vehicle parts include at least one rescue equipment part different from lateral ground supports; the at least one rescue equipment part including an extractable and turnable ladder, wherein said visual markings includes at least one visual marking that represents an actual or an estimated future extension position of said ladder.

2. The firefighting vehicle according to claim 1, wherein the outer extendable vehicle parts include lateral ground supports that are movable between retracted positions and extracted operating positions in which the ends of the supports rest on the ground.

3. The firefighting vehicle according to one of the preceding claims, wherein the overall image (40) is a full environmental view covering 360° around the vehicle (10).

4. The firefighting vehicle according to one of the preceding claims, wherein the cameras (16,18,20,22,24,26) are provided to generate thermal images.

5. Method for positioning a firefighting vehicle comprising an extractable and turntable ladder and extendable lateral supports, said method comprising the following steps:
• monitoring the ground area around the vehicle (10) by means of cameras (16,18,20,22,24,26) in elevated camera positions such that adjacent visual fields (28,30,32,34,36,38) of the cameras (16,18,20,22,24,26) overlap each other,
• combining the single images taken by the cameras (16,18,20,22,24,26) to one overall image (40),
• monitoring the ground area under the vehicle (10) by means of an additional camera disposed under the vehicle (10), and combining the image taken by the additional camera with the overall image (40),
• deriving actual or estimated future extension positions of outer extendable vehicle parts from movements of the vehicle (10),
• calculating within the overall image (40), based on vehicle data, visual markings (42,44,46,48,50,52,54) that represent said derived actual or estimated future positions, and
• displaying the overall image (40) containing the visual markings (42,44,46,48,50,52,54);
wherein the outer extendable vehicle parts include at least one rescue equipment part different from lateral ground supports; the at least one rescue equipment part including an extractable and turnable ladder, wherein said visual markings includes at least one visual marking that represents an actual or an estimated future extension position of said ladder.

6. The method according to claim 5, wherein the overall image (40) represents a full environmental view covering 360° around the vehicle. (10)

7. The method according to claim 5 or 6, wherein the cameras (16,18,20,22,24,26) generate thermal images.

## Patentansprüche

1. Feuerwehrfahrzeug mit einer ausziehbaren und drehbaren Leiter und ausfahrbaren seitlichen Stützen und einem visuellen Assistenzsystem zur Positionierung des Fahrzeugs, umfassend eine Mehrzahl von Kameras (16,18,20,22,24,26), die an dem Fahrzeug (10) in einer erhöhten Position zur Überwachung der Bodenfläche um das Fahrzeug (10) herum angeordnet sind, derart, dass benachbarte Gesichtsfelder (28,30,32,34,36,38) der Kameras (16,18,20,22,24,26) einander überlappen, eine Verarbeitungseinheit zur Kombination der von den Kameras (16,18,20,22,24,26) aufgenommenen Einzelbilder zu einem Gesamtbild und zur Berechnung visueller Markierungen (42,44,46,48,50,52,54) innerhalb des Gesamtbilds (40) auf Grundlage von Fahrzeugdaten, welche visuellen Markierungen tatsächliche oder geschätzte zukünftige Ausfahrpositionen äußerer ausfahrbarer Fahrzeugteile repräsentieren, die von Bewegungen des Fahrzeugs abgeleitet werden, und eine visuelle Anzeige zur Anzeige des Gesamtbilds (40), welches die berechneten visuellen Markierungen (42,44,46,48,50,52,54) enthält, wobei das visuelle Assistenzsystem eine zusätzliche Kamera unter dem Fahrzeug (10) zur Überwachung der Bodenfläche unter dem Fahrzeug (10) umfasst, und die Verarbeitungseinheit dazu ausgebildet ist, das durch die zusätzliche Kamera aufgenommene Bild mit den von den übrigen Kameras (16,18,20,22,24,26) aufgenommenen Bildern zu einem weiteren Gesamtbild (40) zu kombinieren, welches das von der zusätzlichen Kamera aufgenommene Bild enthält, und das weitere Gesamtbild mit dem berechneten visuellen Markierungen (42,44,46,48,50,52,54) auf der visuellen Anzeige anzuzeigen, wobei die äußeren ausfahrbaren Fahrzeugteile zumindest einen Rettungsausrüstungsteil umfassen, der sich von den seitlichen Bodenstützen unterscheidet, welcher zumindest eine Rettungsausrüstungsteil eine ausziehbare und drehbare Leiter umfasst, und die visuellen Markierungen zumindest eine visuelle Markierung umfassen, welche eine tatsächliche oder geschätzte zukünftige Ausfahrposition der Leiter repräsentiert.

2. Feuerwehrfahrzeug gemäß Anspruch 1, bei welchen die äußeren ausfahrbaren Fahrzeugteile seitliche Bodenstützen umfassen, welche zwischen eingezogenen Positionen und ausgefahrenen Betriebspositionen, in welchen die Enden der Stützen auf dem Boden ruhen, beweglich sind.

3. Feuerwehrfahrzeug gemäß einem der vorhergehenden Ansprüche, bei welchem das Gesamtbild (40) eine vollständige Umgebungsansicht ist, welche 360° um das Fahrzeug (10) herum abdeckt.

4. Feuerwehrfahrzeug gemäß einem der vorhergehenden Ansprüche, bei welchem die Kameras (16,18,20,22,24,26) dazu vorgesehen sind, Wärmebilder zu erzeugen.

5. Verfahren zur Positionierung eines Feuerwehrfahrzeugs mit einer ausziehbaren und drehbaren Leiter und ausfahrbaren seitlichen Schlitzen, welches Verfahren die folgenden Schritte umfasst:
- Überwachung der Bodenfläche um das Fahrzeug (10) herum mittels Kameras (16,18,20,22,24,26) in erhöhten Kamerapositionen, derart, dass benachbarte Gesichtsfelder (28,30,32,34,36,38) der Kameras (16,18,20,22,24,26) einander überlappen,
- Kombinieren der von den Kameras (16,18,20,22,24,26) aufgenommenen Einzelbilder zu einem Gesamtbild (40),
- Überwachung der Bodenfläche unter dem Fahrzeug (10) mittels einer zusätzlichen Kamera unter dem Fahrzeug (10) und kombinieren des von der zusätzlichen Kamera aufgenommenen Bildes mit dem Gesamtbild (40),
- Ableiten tatsächlicher oder geschätzter zukünftiger Ausfahrpositionen äußerer ausfahrbarer Fahrzeugteile von Bewegungen des Fahrzeugs (10),
- Berechnen innerhalb des Gesamtbilds (40) auf Grundlage von Fahrzeugdaten visueller Markierungen (42,44,46,48,50,52,54), welche die abgeleiteten tatsächlichen oder geschätzten zukünftigen Positionen repräsentieren, und
- Darstellen des Gesamtbilds (40), das die visuellen Markierungen (42,44,46,48,50,52,54) enthält,
wobei die äußeren ausfahrbaren Fahrzeugteile zumindest einen Rettungsausrüstungsteil umfassen, das sich von den seitlichen Bodenstützen unterscheidet, welches zumindest eine Rettungsausrüstungsteil eine ausziehbare und drehbare Leiter umfasst, wobei die visuellen Markierungen zumindest eine visuelle Markierung umfassen, welche eine tatsächliche oder geschätzte zukünftige Ausfahrposition der Leiter repräsentiert.

6. Verfahren gemäß Anspruch 5, bei welchem das Gesamtbild (40) eine vollständige Umgebungsansicht repräsentiert, welche 360° um das Fahrzeug (10) herum abdeckt.

7. Verfahren gemäß Anspruch 5 oder 6, bei welchem die Kameras (16,18,20,22,24,26) Wärmebilder erzeugen.

## Revendications

1. Véhicule de lutte contre l'incendie comprenant une échelle extractible et tournante et des supports latéraux extensibles, et un système d'assistance visuelle pour positionner ledit véhicule, ledit système d'assistance visuelle comprenant une pluralité de caméras (16, 18, 20, 22, 24, 26) disposées au niveau du véhicule (10) dans une position élevée afin de surveiller la surface du sol autour du véhicule (10) de sorte que des champs visuels (28, 30, 32, 34, 36, 38) adjacents des caméras (16, 18, 20, 22, 24, 26) se chevauchent, une unité de traitement prévue pour combiner les images individuelles prises par les caméras (16, 18, 20, 22, 24, 26) en une seule image globale et pour calculer, dans l'image globale (40), sur la base des données du véhicule, des marquages visuels (42, 44, 46, 48, 50, 52, 54) qui représentent des positions d'extension futures réelles ou estimées des parties de véhicule extensibles externes dérivées des mouvements du véhicule, et un affichage visuel pour afficher l'image globale (40) contenant lesdits marquages visuels calculés (42, 44, 46, 48, 50, 52, 54) dans lequel le système d'assistance visuelle comprend une caméra supplémentaire disposée sous le véhicule (10) afin de surveiller la surface du sol sous le véhicule (10), l'unité de traitement étant configurée pour combiner l'image prise par la caméra supplémentaire avec les images prises par les caméras résiduelles (16, 18, 20, 22, 24, 26) pour obtenir une autre image globale (40) comprenant l'image prise par la caméra supplémentaire, et pour afficher l'image globale supplémentaire avec lesdits marquages visuels calculés (42, 44, 46, 48, 50, 52, 54) sur l'affichage visuel, dans lequel les parties de véhicule extensibles externes comprennent au moins une partie d'équipement de secours différente des supports de sol latéraux, la au moins une partie d'équipement de secours comprenant une échelle extractible et tournante, dans lequel lesdits marquages visuels comprennent au moins un marquage visuel qui représente une position d'extension future réelle ou estimée de ladite échelle.

2. Véhicule de lutte contre l'incendie selon la revendication 1, dans lequel les parties de véhicule extensibles externes comprennent des supports de sol latéraux qui sont mobiles entre des positions rétractées et des positions opérationnelles déployées dans lesquelles les extrémités des supports reposent sur le sol.

3. Véhicule de lutte contre l'incendie selon l'une des revendications précédentes, dans lequel l'image globale (40) est une image environnementale complète couvrant 360° autour du véhicule (10).

4. Véhicule de lutte contre l'incendie selon l'une des revendications précédentes, dans lequel les caméras (16, 18, 20, 22, 24, 26) sont prévues pour générer des images thermiques.

5. Procédé pour positionner un véhicule de lutte contre l'incendie comprenant une échelle extractible et tournante et des supports latéraux extensibles, ledit procédé comprenant les étapes suivantes :
surveiller la surface du sol autour du véhicule (10) au moyen de caméras (16, 18, 20, 22, 24, 26) dans des positions de caméra élevées de sorte que les champs visuels (28, 30, 32, 34, 36, 38) adjacents des caméras (16, 18, 20, 22, 24, 26) se chevauchent,
combiner les images individuelles prises par les caméras (16, 18, 20, 22, 24, 26) en une seule image globale (40),
surveiller la surface du sol autour du véhicule (10) au moyen d'une caméra supplémentaire disposée sous le véhicule (10), et combiner l'image prise par la caméra supplémentaire avec l'image globale (40),
dériver les positions d'extension futures réelles ou estimées des parties de véhicule extensibles externes à partir des mouvements du véhicule (10),
calculer dans l'image globale (40), sur la base des données du véhicule, des marquages visuels (42, 44, 46, 48, 50, 52, 54) qui représentent lesdites positions futures réelles ou estimées dérivées, et
afficher l'image globale (40) contenant les marquages visuels (42, 44, 46, 48, 50, 52, 54) ;
dans lequel les parties de véhicule extensibles externes comprennent au moins une partie d'équipement de secours différente des supports de sol latéraux ; la au moins une partie d'équipement de secours comprenant une échelle extractible et tournante, dans lequel lesdits marquages visuels comprennent au moins un marquage visuel qui représente une position d'extension future réelle ou estimée de ladite échelle.

6. Procédé selon la revendication 5, dans lequel l'image globale (40) représente une vue environnementale complète couvrant 360° autour du véhicule (10).

7. Procédé selon la revendication 5 ou 6, dans lequel les caméras (16, 18, 20, 22, 24, 26) génèrent des images thermiques.
